# EUROPÄISCHE PATENTANMELDUNG

(11) **EP 2 993 775 A1**
(43) Veröffentlichungstag der Anmeldung: **09.03.2016**
(21) Anmeldenummer: 15182133.7
(22) Anmeldetag: 24.08.2015
(51) Int. Cl.: H02M 7/06, H02J 11/00

(54) **GALVANISCH GETRENNTE HILFSVERSORGUNG MITTELS DIELEKTRISCHEM WELLENLEITER UND MIKROWELLEN**

(30) Priorität: 08.09.2014 DE 102014217911
(71) Anmelder: Siemens Aktiengesellschaft, 80333 München (DE)
(72) Erfinder: Ergin, Dominik, 91083 Baiersdorf (DE); Lange, Dennie, 91058 Erlangen (DE); Martius, Sebastian, 91301 Forchheim (DE); Sewiolo, Benjamin, 90587 Obermichelbach OT Rothenberg (DE); Ziroff, Andreas, 80469 München (DE)

(57) **Zusammenfassung**

Die Erfindung betrifft eine Anordnung sowie ein Verfahren zur galvanisch getrennten Energieübertragung, bei denen die Übertragung durch einen dielektrischen Wellenleiter erfolgt, mit dem mindestens zwei Gleichrichtereinrichtungen eine funktionale Verbindung aufweisen, die derart ausgestaltet ist, dass den jeweiligen Gleichrichtereinrichtungen eine die Energieübertragung kennzeichnenden Leistung derart aufgeteilt zugeführt wird, dass jede Gleichrichtereinrichtung eingangsseitig den gleichen Leistungswert erhält.

## Beschreibung

Die Erfindung betrifft eine Anordnung zur galvanisch getrennten Energieübertragung gemäß dem Oberbegriff des Anspruchs 1, sowie ein Verfahren zur galvanisch getrennten Energieübertragung gemäß dem Oberbegriff des Anspruchs 13.

Es ist allgemein bekannt, dass in energietechnischen Anlagen Komponenten angesteuert und mit Energie versorgt werden müssen. Hierbei muss sichergestellt sein, dass Systemkomponenten gegen ein Hochspannungspotential isoliert sind, weshalb ein galvanisch getrennter Aufbau notwendig wird.

Diese Komponenten können z.B. Schaltelemente, ElektronikBaugruppen oder Messstellen sein, welche gegen das Erdpotenzial isoliert werden müssen. Die Energieübertragung erfolgt dabei vor allem drahtlos, beispielsweise über die so genannte "Radio Frequency Identification (RFID)" Technologie oder über Lichtwellenleiter.

Die empfangene Leistung liegt dabei deutlich unter einem Watt, zumeist im 100mW-Bereich. Dies liegt daran, dass die hierfür genutzten diodenbasierten Gleichrichter bzgl. Stromund Spannungsspitzen sowie Entwärmung Limitierungen aufweisen.

Die Aufgabe der Erfindung ist es, ein Verfahren und eine Anordnung anzugeben, die die Nachteile der vorgenannten Lösungen überwinden.

Diese Aufgabe wird gelöst durch die Anordnung zur galvanisch getrennten Energieübertragung gemäß den Merkmalen des Anspruchs 1 sowie durch das Verfahren zur galvanisch getrennten Energieübertragung gemäß den Merkmalen des Anspruchs 13.

Bei der erfindungsgemäßen Anordnung zur galvanisch getrennten Energieübertragung erfolgt die Übertragung durch einen dielektrischen Wellenleiter, mit dem mindestens zwei Gleichrichtereinrichtungen eine funktionale Verbindung aufweisen, die derart ausgestaltet ist, dass den jeweiligen Gleichrichtereinrichtungen eine die Energieübertragung kennzeichnenden Leistung zugeführt wird.

Vorzugsweise erhält jede Gleichrichtereinrichtung eingangsseitig den gleichen Leistungswert. Durch diese Weiterbildung, wird eine symmetrische Speisung der Gleichrichter erreicht und damit der Einsatz der Anordnung in einem Umfeld realisiert, bei dem die zugeführte Energie im Betrieb konstant bleibt. In einem Umfeld, wo sich das ändert, lässt die Erfindung auch eine Weiterbildung zu, bei der eine unsymmetrische Aufteilung der Leistung realisiert wird, wobei dies auch durch eine Weiterbildung durch Einsatz anpassungsfähiger Gleichrichtereinrichtungen begünstigt wird.

Der dielektrische Wellenleiter erlaubt die Energieübertragung über hochfrequente elektrische Signale, welche auf der Hochspannungsseite über die zwei Gleichrichtereinrichtungen in die Versorgungsspannung umgewandelt werden, wobei das Vorsehen der mindestens zwei Gleichrichtereinrichtungen und die Leistungsaufteilung es ermöglichen, dass erhöhte Anforderungen an die Anordnung der Spannungs- und Stromfestigkeit sowie der Erwärmung eingehalten werden, da eine Erhöhung der maximalen Spannung bzw. des maximalen Stromes durch die Struktur der erfindungsgemäßen Anordnung, insbesondere durch Serialisierung und Parallelisierung der beteiligten Schaltungskomponenten und -Verbindungen, möglich wird.

Vorzugsweise ist die funktionale Verbindung als ein Leistungsteiler derart ausgestaltet, dass es ein Verhältnis von Eingangsleistung zu Ausgangsleistung je Ausgang von 1:n aufweist, wobei mit n die Anzahl der Ausgänge definiert ist und jede Ausgangsleistung einer Gleichrichtereinrichtung zugeführt wird. Diese Flexibilität lässt weitere Optionen für die Umsetzung der Gleichrichtung der Signale zu und mit diesem Freiheitsgrad auch eine Zunahme der Robustheit gegenüber Wärme bzw. generell Erhöhung der Betriebsparameter wie Spannung und Strom.

Wenn die Gleichrichtereinrichtung aus einem ersten Zweig, aufweisend zumindest eine erste für positive Halbwelle der gleichzurichtenden Eingangssignale ausgebildete Diode, und einen zweiten Zweig, aufweisend zumindest eine zweite für negative Halbwellen der gleichzurichtenden Eingangssignale ausgebildete Diode, gebildet ist, stellt dies eine geeignete Implementierung für Übertragung von Wechselstrom dar.

Vorzugsweise bilden die Zweige in Anordnung und Beschaltung nach Art einer Einpuls-Verdopplerschaltung - einer so genannten "Villard-Schaltung - die Gleichrichtereinrichtung. Diese Schaltung stellt, insbesondere im Zusammenhang mit der Parallelisierung und Serialisierung von Schaltungselementen, eine besonders geeignete Beschaltung für die erfindungsgemäße Anordnung dar.

Bei einer weiteren Weiterbildung sind die Zweige jeweils aus einer Vielzahl nach Art von Arrays angeordneter Diodenanordnungen gebildet. Durch Arrays der genannten Art lassen sich Anordnungen bilden, die als Ganzes eine Wirkung einer Diode haben. Es wird also eine Diode durch einen Aufbau mehrerer Dioden ersetzt. Dies entfaltet mehrere Möglichkeiten, um beispielsweise Erwärmung zu vermeiden bzw. eine schnellere Abkühlung zu erreichen. Beispielsweise weil durch die Weiterbildung die Fläche der Gleichrichtereinrichtung vergrößert wird.

Alternativ oder ergänzend ist es auch von Vorteil, wenn zumindest Teile der Verbindungen zwischen den Arrays als λ/2 Leitungen ausgestaltet sind. Hierdurch lassen sich parasitäre Verluste, insbesondere der Dioden, ausgleichen bzw. reduzieren.

Ergänzend kann das das jeweilige Array bildende Diodenarray durch einen Halbleiterbaustein, insbesondere einem HSMS 282P Halbleiterchip oder vergleichbaren, gebildet sein. Diese Bausteine sind Massenprodukte und daher leicht und günstig verfügbar. Sie haben zudem bekannte Kenngrößen und Kennlinien, so dass eine Schaltungsdimensionierung und Optimierung der erfindungsgemäßen Anordnung, beispielsweise durch Simulation, unterstützt wird.

Ist der Gleichrichtereinrichtung ein erstes, insbesondere diskret ausgebildetes, insbesondere passives, beispielsweise als "CLC"- bzw. "π"-Filter ausgebildetes, Anpassnetzwerk vorgeschaltet, das derart ausgestaltet ist, dass damit die Eingangsimpedanz transformiert wird, kann eine Effizienzverbesserung durch nichtlineare Optimierung der Eingangsimpedanz der Gleichrichtereinrichtung erreicht werden.

Vorzugsweise ist dabei das Anpassnetzwerk mittels Mikrostreifenleitung oder, insbesondere in so genannter Grounded, Coplanar Technologie, ausgebildet.

Weitere Freiheitsgrade zur Optimierung erhält man durch die Weiterbildung, bei der das als so genannten "Source Tuner" ausgebildetes Anpassnetzwerk derart ausgestaltet ist, dass die Quell-Impedanz auf die Zusammenwirkung mit der Gleichrichtereinrichtung hin einstellbar ist.

Ist der dielektrische Wellenleiter aus Materialien, insbesondere Aluminiumoxid oder Teflon, mit hoher Dielektrizitätskonstante, insbesondere > 1, gebildet, wird die Effizienz der Energieübertragung weiter erhöht, da Abstrahlung, also ungewollter Leistungsverlust reduziert wird.

Bei dem erfindungsgemäßen Verfahren zur galvanisch getrennten Energieübertragung, erfolgt die Übertragung durch einen dielektrischen Wellenleiter, mit dem mindestens zwei Gleichrichtereinrichtungen derart eine funktionale Verbindung aufweisen, dass den jeweiligen Gleichrichtereinrichtungen eine die Energieübertragung kennzeichnenden Leistung derart aufgeteilt zugeführt wird und dass jede Gleichrichtereinrichtung eingangsseitig den gleichen Leistungswert erhält. Das erfindungsgemäße Verfahren legt durch seine Merkmale die Grundlage zur Entfaltung der Vorteile durch die erfindungsgemäße Anordnung und deren Weiterbildungen.

Nachfolgend werden die Erfindung und weitere Vorteile anhand von den in den Figuren dargestellten Ausführungsbeispielen näher erläutert. Dabei zeigt die
- Figur 1: eine vereinfachte schaltungstechnische Darstellung eines Ausführungsbeispiels der Erfindung in einem bevorzugten Einsatzgebiet,
- Figur 2: eine detailliertere schaltungstechnische Darstellung des Ausführungsbeispiels,
- Figur 3a: vereinfachte Darstellung eines Ausführungsbeispiels der erfindungsgemäßen Gleichrichtereinrichtung und der erfindungsgemäßen Kombination mit einem Ausführungsbeispiels des Leistungsteilers,
- Figur 3b: eine Villiard- bzw. Spannungsverdopplerschaltung,
- Figur 4: als erfindungsgemäßes Ausführungsbeispiel eine Ausgestaltung der Spannungsverdopplerschaltung mit Diodenarrays.

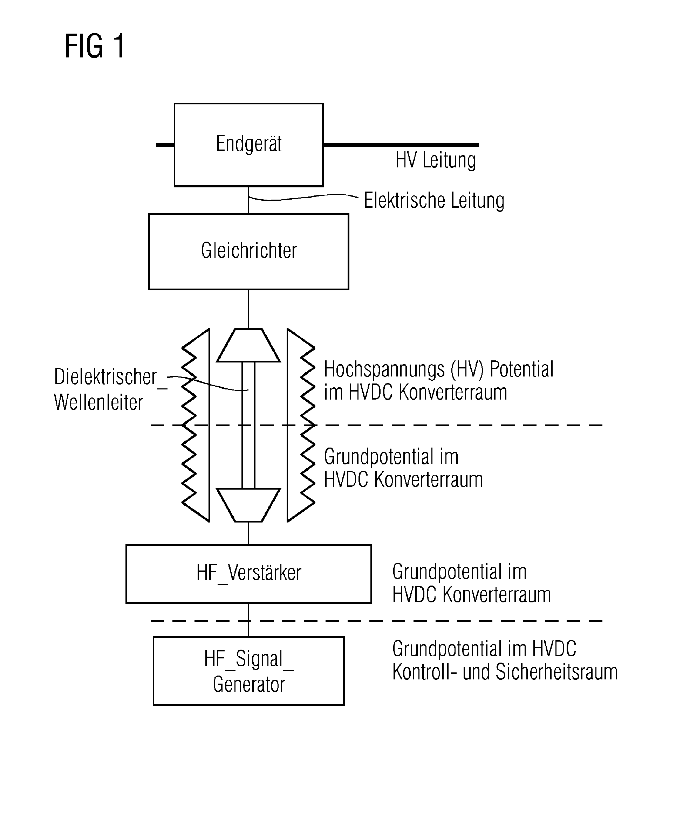

In der Figur 1 ist eine vereinfachte schaltungstechnische Darstellung eines Ausführungsbeispiels der erfindungsgemäßen Anordnung zu sehen, welche auch ein Ausführungsbeispiel des erfindungsgemäßen Verfahrens wiedergibt.

Zu erkennen ist eine Energieübertragungsanordnung, welche ausgehend von einem Hochfrequenzsignalgenerator HF_SIGNAL_GENERATOR über einen Hochfrequenzverstärker HF_VERSTÄRKER unter Nutzung eines dielektrischen Wellenleiters DIELEKTRISCHER_WELLENLEITER die galvanische Trennung und Übertragung der Energie zu einer Gleichrichtereinrichtung GLEICHRICHTER derart bereitstellt, dass die per Wellenleiter übertragene Energie einer Gleichrichtung unterworfen wird, so dass die der Gleichrichtereinrichtung entnehmbare gleichgerichtete, also als, sich aus dem Gefälle von einem Potenzial im Hochvoltbereich und einem weiteren Potenzial, insbesondere im Niedervoltbereich, ergebende, als Gleichspannung vorliegende, Spannung an einem an einer Hochspannungsleitung (HV Leitung) anliegenden Endgerät ENDGERÄT verfügbar ist.

Um die Effizienz der elektronischen Bauteile möglichst hoch zu halten und aufgrund von regulatorischen Bedingungen bzgl. des Abstrahlverhaltens kann das dargestellte Ausführungsbeispiel derart weitergebildet sein, dass sich die Frequenzen des Hochfrequenzsignals im Rahmen des ISM-Bandes 2,45 GHz und 5,8 GHz befinden. Ferner ist es von Vorteil, wenn man zur effizienten Energieübertragung ein Material mit einem niedrigen tan δ in einem solchen Rahmen der Übertragungsfrequenz verwendet.

Um den Wellenleiter DIELEKTRISCHER_WELLENLEITER möglichst kompakt zu halten und die Abstrahlung zu minimieren, ist die Dielektrizitätskonstante εᵣ möglichst hoch gewählt. Beispielmaterialien, mit denen diese erfindungsgemäße Weiterbildung erreicht wird, sind Aluminiumoxid oder Teflon.

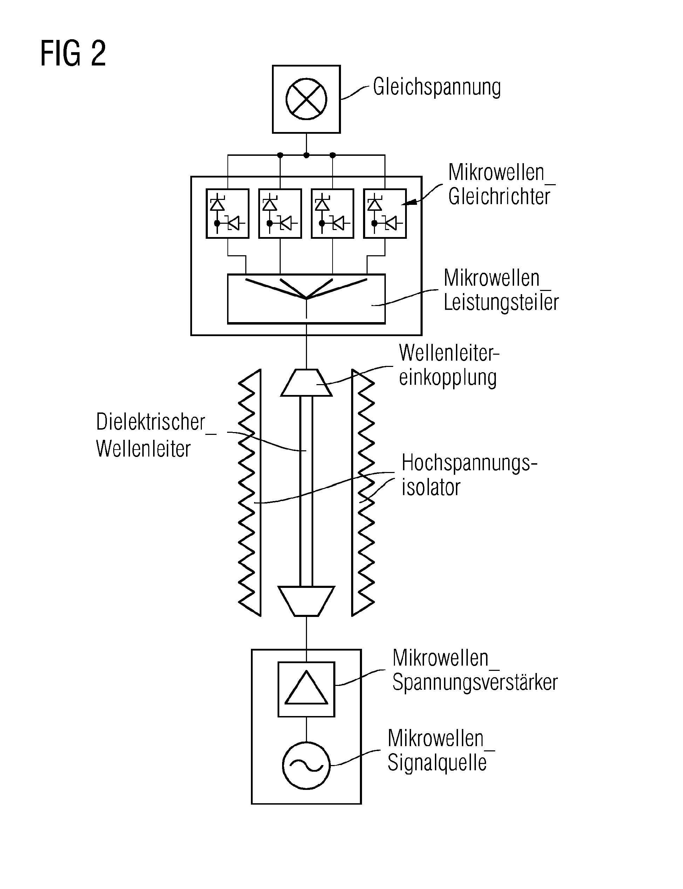

In dem in Figur 2 detaillierter dargestellten Ausführungsbeispiel ist unter anderem eine Weiterbildung zu erkennen, die eine Ausgangsleistung der Gleichrichtereinrichtung MIKROWELLEN_GLEICHRICHTER von ≥10 Watt am Ausgang der Gleichrichtereinrichtung MIKROWELLEN_GLEICHRICHTER ermöglicht.

Dies wird durch den Einsatz eines Leistungsteilers MIKROWLLEN_LEISTUNGSTEILER erzielt, mit dem das übertragene HF-Signal, wie in Figur 2 zu sehen ist, auf n Pfade aufgeteilt wird, da es sich beim Leistungsteiler MIKROWELLEN LEISTUNGSTEILER um einen 1:n Leistungsteiler handelt, der ein Eingangssignal gleichmäßig auf die n Pfade aufteilt.

Damit werden die hinter dem Leistungsteiler MIKROWELLEN LEISTUNGSTEILER je Pfad platzierten Gleichrichter-Dioden jeweils mit identischer Leistung ausgesteuert.

Alternativ hierzu ist es denkbar, auch eine asymmetrische Ansteuerung derart vorzusehen, dass bei der Aufteilung unterschiedliche Leistungswerte auf die Pfade gebracht werden.

Gemäß dem Beispiel wird je nach Leistungsbedarf bzw. Höhe der HF-Eingangsleistung bei identischer Gleichrichter-Konfiguration MIKROWELLEN_GLEICHTER ein größeres Teilerverhältnis gewählt werden.

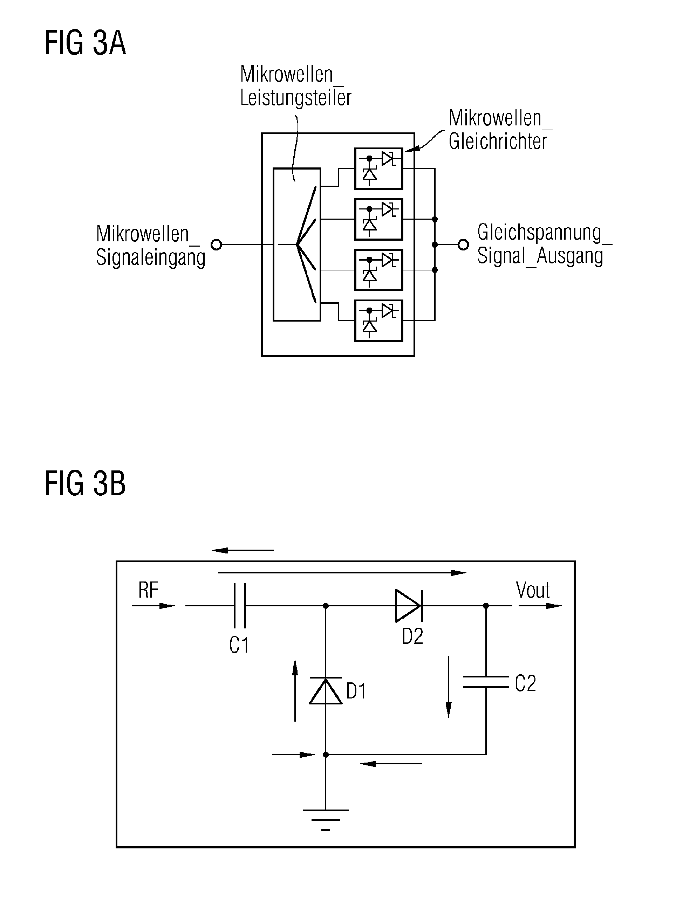

In Figur 3 ist das in der Figur 2 stark vereinfachte Schaltbild der erfindungsgemäßen Gleichrichtereinrichtung MIKROWELLEN GLEICHRICHTER zur weiteren Erläuterung separat dargestellt. In Figur 3a sind dabei die einzelnen Pfade zu erkennen, sowie die prinzipielle Anordnung der Dioden je Zweig.

Hierbei wird deutlich, dass diese Anordnung sich an der so genannten Villard- oder Spannungsverdopplerschaltung orientiert, wie sie in Figur 3b gezeigt ist und wo zu erkennen ist, wie die einzelnen Halbwellen der hochfrequenten Signale in der Schaltung als Strom einwirken.

Zu sehen ist, dass die negative Halbwelle einer ersten Diode D1 zugeführt wird, während die positive Halbwelle von einer zweiten Diode D2 zugeführt wird.

Da die Eingangsleistung durch die Erfindung gewährleistet im Watt-Bereich liegen kann, wobei dies im vorab diskutierten Beispiel bei 2 Watt liegen soll, wird erfindungsgemäß nun für diese Verdopplerschaltung statt einer Diode ein Array von seriellen und parallelen Dioden verwendet.

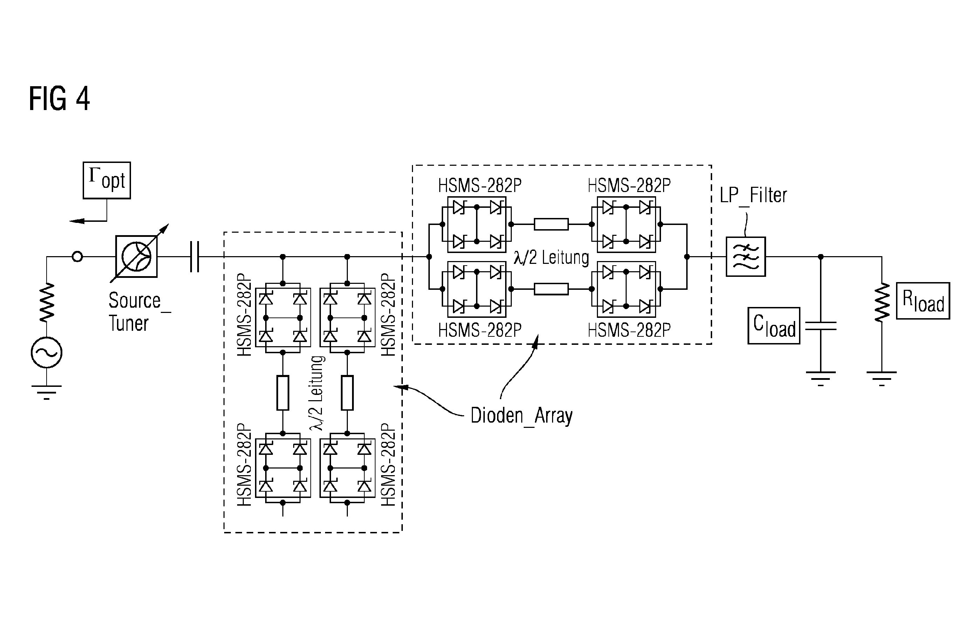

Eine sich hieraus ergebende Struktur eines Pfades ist in Figur 4 gezeigt. Durch diesen Ansatz werden die in den Pfaden anfallenden Spannungen und die Ströme auf mehrere Dioden verteilt.

Vorteilhaft weitergebildet wird dies dadurch, dass zumindest Teilgruppen auf einem Halbleiter liegen, da diese dann aufgrund der geringeren Toleranzen gleichmäßiger ausgesteuert werden und sich die Schaltung auf einem Chip gleichmäßiger erwärmt. Bei dem Ausführungsbeispiel handelt es sich um ein auf dem Halbleitermarkt verfügbares 2x2 Dioden-Array mit der Bezeichnung HSMS 282P.

In B. Zhang, X. Zhao, C. Yu, K. Huang, and C. Liu: "A Power Enhanced High Efficiency 2.45 GHz Rectifier Based on Diode Array", Journal of Electromagnetic Waves & Applications, Vol. 25 Issue 5/6 p. 765-774, 2011, finden sich Belege, dass die erfindungsgemäße Weiterbildung, Dioden durch Diodenarrays zu ersetzen, realisierbar ist, da mit Diodenarrays die Betriebskennlinien von Dioden zumindest teilweise nachgeahmt werden können.

Vorteilhaft ist es weiter, wenn, wie dargestellt, die DiodenArrays durch λ/2-Leitungen physikalisch getrennt werden, damit sich die Dioden nicht überhitzen. Außerdem kompensiert diese Konfiguration die parasitären Eigenschaften der Dioden.

Die Quell-Impedanz für eine optimale Effizienz des Gleichrichters und eine maximale Ausgangsleistung wird über den Source-Tuner und eine Source-Pull-Simulation ermittelt.

Mit Hilfe eines passiven Anpassnetzwerks SOURCE_TUNER (diskret, z.B. CLC in PI-Konfiguration, (grounded) Coplanar oder in Mikrostreifenleitungstechnik) wird die Eingangsimpedanz transformiert, damit die Dioden die optimale Impedanz - in der Figur mit Γ_{Opt} bezeichnet - am Eingang erfahren.

Die Erfindung ist nicht auf die gezeigten Ausführungsbeispiele beschränkt, sondern umfasst vielmehr alle durch die Ansprüche umfassten Ausführungsformen und Weiterbildungen, welche u.a. die erfindungsgemäße Gleichrichterkonfiguration mit Leistungsteiler, Array und dielektrischen Wellenleiter für die Übertragung von Energie nutzen, um hohe Leistungen für Endgeräte auf der Empfängerseite und hohe Effizienz zu bieten, sowie Ausführungsformen und Weiterbildungen, die eine Flexibilität durch den 1:n Leistungsteiler, Effizienzverbesserung durch nichtlineare Optimierung der Eingangsimpedanz des Gleichrichters, Spannungsverdoppler-Topologie, Erhöhung der maximalen Spannung bzw. des maximalen Stromes durch Serialisierung und Parallelisierung, sowie räumliche Trennung der Heatspots über λ/2-Leitungen und Verbesserung der parasitären Eigenschaften der Dioden bieten.

## Patentansprüche

1. Anordnung zur galvanisch getrennten Energieübertragung, derart ausgestaltet, dass die Übertragung durch einen dielektrischen Wellenleiter erfolgt, mit dem mindestens zwei Gleichrichtereinrichtungen eine funktionale Verbindung aufweisen, die derart ausgestaltet ist, dass den jeweiligen Gleichrichtereinrichtungen eine die Energieübertragung kennzeichnenden Leistung auf jede Gleichrichtereinrichtung aufgeteilt zugeführt wird.

2. Anordnung nach Anspruch 1, derart ausgestaltet, dass jeder Gleichrichtereinrichtung eingangsseitig der gleiche Leistungswert zugeführt wird.

3. Anordnung nach einem der vorhergehenden Ansprüche , **dadurch gekennzeichnet, dass** die funktionale Verbindung als ein Leistungsteiler derart ausgestaltet ist, dass es ein Verhältnis von Eingangsleistung zu Ausgangsleistung je Ausgang von 1:n aufweist, wobei mit n die Anzahl der Ausgänge definiert ist und jede Ausgangsleistung einer Gleichrichtereinrichtung zugeführt wird.

4. Anordnung nach einem der vorhergehenden Ansprüche, **dadurch gekennzeichnet, dass** die Gleichrichteranordnung aus einem ersten Zweig, aufweisend zumindest eine erste für positive Halbwelle der gleichzurichtenden Eingangssignale ausgebildete Diode, und einen zweiten Zweig, aufweisend zumindest eine zweite für negative Halbwellen der gleichzurichtenden Eingangssignale ausgebildete Diode, gebildet ist.

5. Anordnung nach dem vorhergehenden Anspruch, **dadurch gekennzeichnet, dass** die Zweige in Anordnung und Beschaltung nach Art einer Einpuls-Verdopplerschaltung, insbesondere eine so genannte "Villard-Schaltung, die Gleichrichtereinrichtung bilden.

6. Anordnung nach einem der beiden vorhergehenden Ansprüche, **dadurch gekennzeichnet, dass** die Zweige jeweils aus einer Vielzahl nach Art von Arrays angeordneter Diodenanordnungen gebildet sind.

7. Anordnung nach dem vorhergehenden Anspruch 2, **dadurch gekennzeichnet, dass** die das jeweilige Array bildende Diodenanordnung, durch einen Halbleiterbaustein, insbesondere einem HSMS 282P Halbleiterchip, gebildet ist.

8. Anordnung nach dem vorhergehenden Anspruch, **dadurch gekennzeichnet, dass** zumindest Teile der Verbindungen zwischen den Arrays als λ/2 Leitungen ausgebildet sind.

9. Anordnung nach einem der vorhergehenden Ansprüche, **dadurch gekennzeichnet, dass** der Gleichrichtereinrichtung ein erstes diskret, insbesondere als "CLC"- bzw. "π"-Filter, ausgebildetes, Anpassnetzwerk vorgeschaltet ist, das derart ausgestaltet ist, dass damit die Eingangsimpedanz transformiert wird.

10. Anordnung nach dem vorhergehenden Anspruch, **dadurch gekennzeichnet, dass** das Anpassnetzwerk mittels Mikrostreifenleitung, oder, insbesondere so genannter "grounded", Coplanar Technologie ausgebildet ist.

11. Anordnung nach einem der vorhergehenden Ansprüche, **dadurch gekennzeichnet, dass** ein zweites in der Art des so genannten "Source Tuner" ausgebildetes Anpassnetzwerk derart ausgestaltet ist, dass die Quell-Impedanz auf die Zusammenwirkung mit der Gleichrichtereinrichtung hin einstellbar ist.

12. Anordnung nach einem der vorhergehenden Ansprüche, **dadurch gekennzeichnet, dass** der dielektrische Wellenleiter aus Materialien, insbesondere Aluminiumoxid oder Teflon, mit hoher Dielektrizitätskonstante, insbesondere > 1, gebildet ist.

13. Verfahren zur galvanisch getrennten Energieübertragung,
bei der die Übertragung durch einen dielektrischen Wellenleiter erfolgt, mit dem mindestens zwei Gleichrichtereinrichtungen derart eine funktionale Verbindung aufweisen, dass den jeweiligen Gleichrichtereinrichtungen eine die Energieübertragung kennzeichnenden Leistung aufgeteilt zugeführt wird und dass jede Gleichrichtereinrichtung eingangsseitig den gleichen Leistungswert erhält.
